# EUROPEAN PATENT APPLICATION

(11) **EP 4 650 016 A1**
(43) Date of publication of application: **19.11.2025**
(21) Application number: 25175395.0
(22) Date of filing: 09.05.2025
(51) Int. Cl.: A63F 13/21, A63F 13/213, A63F 13/215, A63F 13/355, A63F 13/65, A63F 13/92, H04N 21/00, A63F 13/28, A63F 13/358

(54) **STREAMING SYSTEM**

(30) Priority: 15.05.2024 GB 202406916
(71) Applicant: Sony Interactive Entertainment Inc., Tokyo 108-0075 (JP)
(72) Inventor: BIGOS, Andrew, London, W1F 7LP (GB); MOTILLA, Daniel, London, W1F 7LP (GB); ZADTOOTAGHAJ, Saman, London, W1F 7LP (GB); BARMAN, Nabajeet, London, W1F 7LP (GB); SANDERS, Matthew, London, W1F 7LP (GB); CURRIUS, Roc, London, W1F 7LP (GB)
(74) Representative: Gill Jennings & Every LLP

(57) **Abstract**

A streaming system (1) is disclosed, comprising: a server computer (2) configured to send a stream of video data; a streaming device (4) configured to receive the video data and provide the video data to a display (10) for displaying the video data to a viewer (12); and a sensor (14) in communication with the streaming device, configured to measure a quantity that enables a viewing distance (D) between the display and the viewer to be determined; wherein the streaming device is configured to use the quantity to determine the viewing distance and send the viewing distance to the server computer; wherein the server computer is configured to adjust one or more features of the video data based on the viewing distance.

## Description

### FIELD OF THE INVENTION

The invention relates to streaming systems. In particular, the invention relates to streaming systems that use computing and network resources more efficiently.

### BACKGROUND

In video streaming systems it is desirable to minimise the latency of the video stream to improve the experience for the user. This is particularly the case for video game streaming systems where latency between a user input and an in-game consequence can be keenly felt by the user and may be frustrating if the latency is too high. However, reduced latency is also useful in non-video game streaming systems to avoid needing to pause the corresponding video content to buffer the stream.

It is also desirable to provide streaming systems that can provide an experience more tailored to the needs of individual users.

It is an object of the invention to address these issues.

### SUMMARY OF INVENTION

According to a first aspect of the present invention, there is provided a streaming system, comprising: a server computer configured to send a stream of video data; a streaming device configured to receive the video data and provide the video data to a display for displaying the video data to a viewer; and a sensor in communication with the streaming device, configured to measure a quantity that enables a viewing distance between the display and the viewer to be determined; wherein the streaming device is configured to use the quantity to determine the viewing distance and send the viewing distance to the server computer; wherein the server computer is configured to adjust one or more features of the video data based on the viewing distance.

In this way, the server computer can adapt the video data to a user's viewing conditions. The viewing distance can be used in various ways to improve the efficiency of the streaming system or to maximise the quality of experience for a user. For example, it is known that some visual details at high resolutions are not perceivable by viewers when viewers are positioned beyond a threshold distance from a display. Therefore, when the viewer is positioned further from the display, the video data can be adjusted to a lower resolution to reduce the streaming latency without sacrificing the perceived quality of the video image.

In other examples, the one or more features can relate to any suitable aspect of the video data. For instance, when the user is further from the display, the volume of an audio part of the video data can be increased automatically, which may be more convenient for the user. In another example, the video data can be processed more efficiently, e.g. rendered in less detail, when the user is positioned further from the display. In any case, adjusting these various features of the video or video game content based on the viewing distance would be reflected in changes to the video data that forms the content.

It would be appreciated by persons skilled in the art that the viewing distance can be determined in various ways depending on the particular choice of sensor. In other words, the viewing distance can be calculated or inferred based on the measured quantity, or the measured quantity can be a direct measurement of distance.

Preferably, the streaming system is a video game streaming system, the server computer is configured to perform processing of a video game, and the video data comprises video data of the video game. In this way, the streaming system can be used to perform cloud gaming. In embodiments where the one or more features also relate to an amount of detail in the video data, it is particularly advantageous to reduce the amount of detail when the user is positioned further from the display to reduce latency, which is one challenge associated with cloud gaming systems.

Preferably, the one or more features include at least one feature related to an amount of visual detail contained in the video data. In particular, the server computer can be configured to increase an amount of visual detail in the video data when the viewer is at a lower viewing distance and to decrease an amount of visual detail when the viewer is at a higher viewing distance from the display. In this way, the streaming system can more efficiently utilise network or computational resources without necessarily sacrificing the perceived quality of the image.

Preferably, the streaming device is configured to inform the server computer of the size and resolution of the display and the server computer is configured to adjust the one or more features relative to the size and resolution of the display. In this way, the server computer can perform a more suitable adjustment of the one or more features that takes into account the properties of the particular display. For instance, minute visual details are more visible at higher distances from a larger display. In that case, the server computer may implement a higher distance threshold before reducing or eliminating those visual details in the video data. The "size" of the display can include any information relevant to viewing the video data, such as the dimensions or aspect ratio of display. The type of the display may also be considered in the same manner.

Preferably, the one or more features comprise a resolution of the video data. In particular, the server computer can be configured to increase the resolution when the viewer is closer to the display and to decrease the resolution when the viewer is further from the display. In this way, the video data can be streamed more efficiently, utilising less network bandwidth. For example, the server computer may be configured to adjust the video data to successively lower resolutions (e.g., 4K to 1080p, 1080p to 720p, and so on) when the viewing distance is determined to be greater than corresponding successive threshold distances. Preferably, the server computer is configured to decrease the resolution when the viewer is determined to be beyond a relative threshold distance from the display based on Nyquist theorem.

Preferably, the streaming system comprises a peripheral device configured to control the streaming device, wherein the sensor is provided on or in the peripheral device. In this way, the need for a separate sensor device is avoided. However, in other embodiments, the sensor can be provided in any suitable device in communication with the streaming device. Some specific examples include a user electronic device such as smartwatch or mobile phone, a display device, and a standalone sensor device.

More preferably, the peripheral device is a video game controller. In this way, the sensor is contained in a device that generally can be safely presumed to be co-located with the user, which can make measuring the viewing distance more convenient.

Preferably, the sensor comprises a microphone and the streaming device is configured to determine the viewing distance based on a time delay or volume of sound detected by the microphone and emitted by a speaker of the display. In this way, the viewing distance can be measured using a sensor that is already present in many video game controllers, making the present solution easier to retrofit to existing streaming systems.

Preferably, the sensor comprises a wireless receiver configured to measure a signal strength of a signal received from the streaming device. In this way, the viewing distance can be measured using a device that can act as a sensor and is already present in some video game controllers, making the present solution easier to retrofit to existing streaming systems. For example, the wireless receiver (or "wireless interface) can be configured to determine a received signal strength indicator (RSSI), from which a distance can be estimated using techniques known in the art.

Preferably, the streaming device is configured to calibrate the determined viewing distance to correct for a separation distance between the streaming device and the display. In this way, the viewing distance can be estimated more accurately. The calibration can be determined using any suitable technique known in the art. In one example, the streaming device can prompt the user to input their own estimation of the separation distance. In other embodiments, it may be assumed that the streaming device and display are co-located.

Preferably, the sensor comprises a camera. In this way, the viewing distance can be determined based on an image taken by the camera. The image may be analysed to determine a spatial frequency of a captured repeating pattern, from which a viewing distance can be calculated. The repeating pattern may be a specifically displayed pattern or a perceived pattern, such as a Moiré pattern. The camera can also enable other viewing conditions, such as an ambient lighting level, to be determined that can be used to adjust the one or more features to optimise the viewer's experience.

Preferably, the streaming device is configured to provide a pattern or marker to the display and use an image of the pattern or marker taken by the camera to estimate or determine the viewing distance. In this way, the viewing distance may be calculated precisely and without necessarily needing to know the size and resolution of the display. The image may be analysed to determine whether a human eye would detect aliasing, using known techniques. The pattern can comprise a plurality of parallel lines. The pattern can be a moving pattern, for instance where the parallel lines appear to move closer together, or increase in density, and the sensor can take a series of images to identify when aliasing occurs. From this, the relative viewing distance (that is, the absolute viewing distance adjusted for the size and resolution of the display) can be determined using known techniques. The captured pattern or marker may be analysed to determine a spatial frequency of a repeating pattern in the image, which is related to the viewing distance, as known to persons skilled in the art.

Preferably, the sensor comprises a light sensor. In this way, the viewing distance can be inferred using a relatively cheap sensor component that is easy to integrate into various devices. The light sensor can be of any suitable kind, such as a photodiode. The light sensor may also enable the measurement of ambient lighting conditions that can be provided to the server computer by the streaming device to optimise the one or more features.

Preferably, the streaming device is configured to determine, based on a number of active peripheral devices connected to the streaming device or data from the sensor, that a plurality of viewers are present and to send the viewing distance of the nearest viewer to the server computer. In this way, the streaming device uses a viewing distance that avoids negatively affecting the viewing experience of any one viewer.

Preferably, the one or more features comprise an encoding of the video data. For example, video data can be encoded differently by changing the resolution or bits per pixel for streamed video data based on the viewing distance.

Preferably, the one or more features comprise a frame rate. In this way, the amount of bandwidth required to stream the video data can be adjusted. Lower frame rates may be more acceptable for the user when at higher viewing distances compared to lower distances. Therefore, adjusting the frame rate of the video data can reduce the latency when using the streaming system while providing an acceptable compromise on visual quality.

Preferably, the one or more features are also adjusted based on user preferences stored by the server computer or the streaming device. In this way, the streaming system can tailor the streaming experience to specific users. For example, a user may be enabled by the streaming device to select a preference for visual quality over latency reduction. The baseline adjustment of the one or more features can be tweaked in favour of higher visual detail or less latency according to the selected preferences of the user.

Preferably, the streaming system is a video game streaming system, the video data represents an in-game visual feature, and the server computer is configured to adjust a level of detail of the visual feature based on the viewing distance. In this way, the computational resources of the server computer can be used more efficiently. For example, the server computer could adjust how in-game objects or visual features are rendered based on the viewing distance, such that less detail is rendered when the user is further from the display. In some specific examples, a number of polygons used to render an in-game object, anti-aliasing methods, lighting effects, or in-game particle effects can be adjusted based on the viewing distance. Adjusting how the video game is rendered in this way would be reflected in the video data, which would show less visual detail. Any other in-game aspect can be adjusted based on the viewing distance in other examples.

Preferably, the streaming system comprises the display.

According to a second aspect of the present invention, there is provided a computer-implemented method of operating a streaming system, comprising: sending, from a server computer to a streaming device, a stream of video data; receiving the video data at the streaming device and providing the video data to a display for displaying the video data to a viewer; measuring, using a sensor, a quantity that enables a viewing distance between the display and the viewer to be determined; using, by the streaming device, the quantity to determine the viewing distance; sending the viewing distance to the server computer; and adjusting, by the server computer, one or more features of the video data based on the viewing distance.

According to a third aspect of the present invention, there is provided a server computer suitable for use in the streaming system of the first aspect, comprising one or more processors configured to: send a stream of video data to a streaming device; receive, from the streaming device, an indication of a viewing distance between a display and a user; and adjust one or more features of the video data based on the viewing distance.

According to a fourth aspect of the present invention, there is provided a streaming device suitable for use in the streaming system of the first aspect, comprising one or more processors configured to: receive video data from a server computer and provide the video data to a display for displaying the video data to a viewer; receive, from a sensor in communication with the streaming device configured to measure a quantity that enables a viewing distance between the display and the viewer to be determined, the quantity; use the quantity to determine the viewing distance; and send the viewing distance to the server computer.

According to a further aspect of the present invention, there is provided a non-transient computer readable medium comprising executable instructions which, when executed by a processor, cause the processor to perform steps comprising: sending a stream of video data to a streaming device; receiving, from the streaming device, an indication of a viewing distance between a display and a user; and adjusting one or more features of the video data based on the viewing distance.

According to a further aspect of the present invention, there is provided a non-transient computer readable medium comprising executable instructions which, when executed by a processor, cause the processor to perform steps comprising: receiving video data from a server computer and providing the video data to a display for displaying the video data to a viewer; receiving, from a sensor configured to measure a quantity that enables a viewing distance between the display and the viewer to be determined, the quantity; using the quantity to determine the viewing distance; and sending the viewing distance to the server computer.

The streaming system of the first aspect of the invention relies on a streaming device to act as a conduit between the server computer and a display. It is therefore considered that any streaming system would require coordination between a server computer and a streaming device to implement the solutions described herein.

### BRIEF DESCRIPTION OF DRAWINGS

Embodiments of the invention are now described, by way of example, with reference to the drawings, in which:
Figure 1 shows a schematic diagram of a streaming system according to an embodiment of the invention;
Figure 2 shows a schematic control diagram of components of a streaming system according to an embodiment of the invention; and
Figure 3 shows a flowchart of a method of operating a streaming system according to an embodiment of the invention.

### DETAILED DESCRIPTION

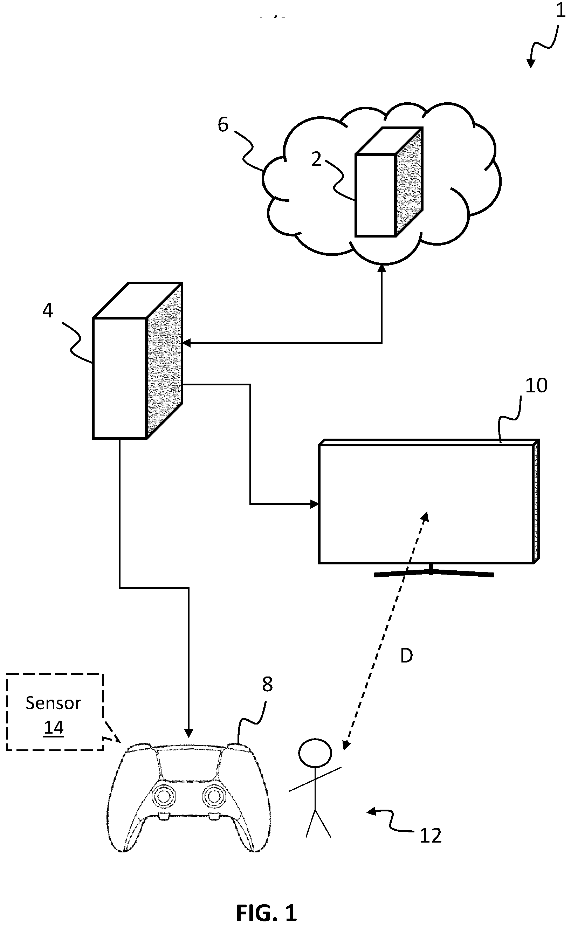

Figure 1 shows a schematic diagram of a streaming system 1 according to an embodiment of the invention.

In this example embodiment, the streaming system 1 is a video game streaming system configured for streaming video games. However, the present invention can be implemented in any kind of video streaming service or system.

The streaming system 1 comprises a server computer 2 in communication with a video game console 4 over a network 6, which can be the internet. A controller 8 is provided for controlling the video game console 4. A display 10 is provided for displaying video data received by the video game console 4 to a user 12 (or "viewer"). The video game controller 8 comprises a sensor 14 for measuring a quantity that enables a viewing distance (D) between the user 12 and the display 10 to be measured, calculated, or otherwise inferred.

The server computer 2 can be any suitable type of computer which may be embodied as a physical computer or a virtual computer of a data centre. The server computer 2 is configured to process video games and stream the video content of the video game to the video game console 2. The server computer 2 can also store and stream video media content to the video game console 2. The server computer 2 is operated and managed by a streaming service in this example. In another example system, the server computer 2 can be operated and managed by a user. For instance, the server computer 2 can be a user's video game console that streams to their own remote device, or a device of another player of a multiplayer game that is remote to the user's video game console.

The video game console 4 can be of any suitable kind known in the art. In other embodiments, video game console 4 can be any other kind of streaming device configured to receive video data and provide the video data to a display. In the example of Figure 1, the video game console 4 is a separate device from the display 10. In other examples, the streaming device can be a streaming function embedded in another device, such as a television, mobile device, or other display device. That is, the streaming device and the display can be part of the same device. Furthermore, in other examples, the streaming device may be configured mainly as a hub device for providing video data from the server computer 2 to the display 10 that is not usable to run video-games independently from the server computer 2.

The video game controller 8 can be any suitable kind of controller known in the art. However, any other suitable peripheral device usable to control the video game console (or other streaming device) can be used in other example embodiments.

In this example, the display 10 is a television. However, the display 10 can be any other suitable type of device capable of displaying video data in other embodiments.

The sensor 14 can be any kind of sensor suitable for measuring a quantity that enables the distance between the user 12 and the display 10 to be determined.

In one example, the sensor 14 is a microphone configured to detect a sound emitted by the display 10. The time of flight or the volume of the detected sound can be used to estimate the distance between the display 10 and the sensor 14 using, e.g., standard physics equations.

In another example, the sensor 14 can include a wireless interface configured to measure a signal strength of a wireless signal received from the streaming device. The wireless interface can be configured to determine an RSSI (Received Signal Strength Indicator) of the wireless signal in one example. Distances based on signal strength can be estimated using techniques known in the art. In one example, the wireless interface is or comprises a Bluetooth interface.

In a further example, the sensor 14 can be camera. The camera can be configured to take an image of the display 10 to estimate the distance to the display 10 using known image analysis techniques. Alternatively, or in addition, the video game console 4 (or any other streaming device) can provide a calibration pattern to the display, such as a plurality of parallel lines. The calibration pattern can be used to assess the level of detail that would be distinguishable by a user. In one specific example, the camera may be able to determine whether aliasing is visible, or would be visible to a user, in the calibration pattern. The calibration pattern may be a moving pattern involving a series of images, such as a video of parallel lines appearing to move gradually closer together, to assess when aliasing would start to be visible to the user.

In one specific implementation, the camera can capture an image of a reference marker or pattern shown on the display 10. Moiré fringes can appear in a digitally captured image of a digital display. The period of the captured Moiré fringes changes depending on the distance from the camera to the display 10. Therefore, analysing the distance between successive fringes in the captured image of the display 10 enables the viewing distance (D) to be calculated or otherwise inferred. This calculation can be carried out using techniques known in the art. In other embodiments, the reference pattern may be an intentionally displayed repeating pattern, rather than a perceived pattern such as a Moiré pattern. In this case, the spatial frequency or period of repeating features in the captured image provides an indication of the viewing distance (D). In yet further embodiments, displaying a specific marker or pattern may not be required.

In a further example, the sensor 14 can be a light sensor, such as a photodiode. The light sensor can be configured to measure a degree of brightness of light emitted by the display 10 to estimate the viewing distance (D). The light sensor may also be used to estimate the ambient lighting conditions, which could also provide relevant information that can be passed to the server computer 2 by the video game console 4 together with the viewing distance (D).

The sensor 14 is provided in or on the video game controller 8 in this example embodiment, as this avoids the need for a separate device and the video game controller 8 can generally be presumed to be co-located with the user 12. However, the sensor 14 can be provided elsewhere in the streaming system 1 in other embodiments. For example, the sensor 14 can be a camera or other sensor 14 integrated in the display 10. Alternatively, the sensor 14 can be a separate device, such as a user's mobile phone, wearable device, or a bespoke device, that can communicate with the video game console 4 (or any other streaming device) independently.

In other embodiments, a combination of the approaches described above can be employed to determine the viewing distance (D), such that a plurality of sensors (or a sensor comprising multiple sub-sensors) are provided, which may be more accurate compared to the use of a single sensor.

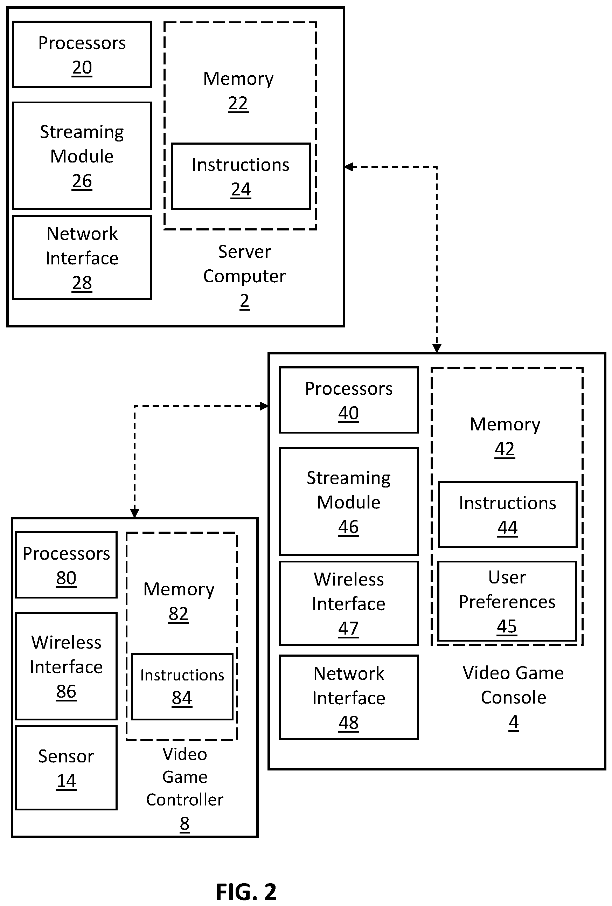

Figure 2 shows a schematic control diagram of the sever computer 2, the video game console 4 and the video game controller 8 according to an embodiment of the invention.

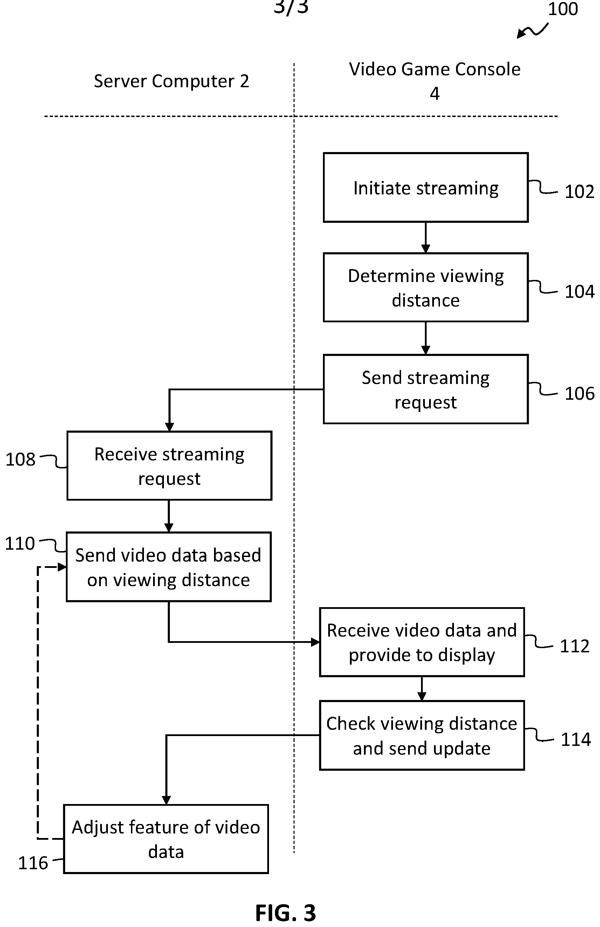

The server computer 2 comprises one or more processors 20 and a memory 22 for storing executable instructions 24 that can be executed by the processors 20 to implement a streaming module 26. The functionality of the streaming module 26 is described in further detail below with reference to Figure 3. The server computer 2 comprises a suitable network interface 28 for communicating with the video game console 4 over a network, as indicated by the dashed line.

Similarly, the video game console 4 comprises one or more processors 40 and a memory 42 for storing executable instructions 44 that can be executed by the processors 40 to implement a streaming module 46. The functionality of the streaming module 46 is described in further detail below with reference to Figure 3. The memory 42 may also store user preferences 45 that indicate the user's preferred streaming settings. Any suitable wireless interface 47, such as a Bluetooth interface, may be provided for communicating with the video game controller 8. A wired or direct connection with the video game console 4 can be provided in other embodiments. The video game console 4 comprises a suitable network interface 48 for communicating with the server computer 2 over a network.

In this example, the video game controller 8 also comprises one or more processors 80 and a memory 82 for storing executable instructions 84 that can be executed by the processors 80 to operate the sensor 14 and perform various other functions. A suitable wireless interface 86, such as a Bluetooth interface, is provided for communicating with the video game console 4, as indicated by the dashed line in Figure 2, however a wired or direct connection can be implemented in other examples. In cases where the sensor 14 is a wireless interface, a separate wireless interface 86 may not be necessary or provided.

Figure 3 shows a flowchart of a method 100 of streaming using the streaming system 1 according to an embodiment of the invention. As indicated by the left and right columns of Figure 3, steps of the method 100 are performed by the sever computer 2 or the video game console 4. In each case, the steps can be implemented by the streaming module 26 or the streaming module 46, respectively.

In step 102, the user 12 of the video game console 4 initiates streaming, e.g., by operating an in-console menu using the video game controller 8. For example, the user 12 can select a video game that they wish to play via streaming, or video content they wish to view. In either case, the server computer 2 responds in a later step by sending a stream of video data to the video game console 2.

In step 104, the video game console 4 uses the sensor 14 to determine the viewing distance (D), i.e., the distance between the display 10 and the user 12. This step can be performed in various ways depending on the choice or choices of sensor 14. In one example where the sensor 14 includes a wireless interface, the interface may check a signal strength of a signal received from the video game console 4. Using known techniques, a formula can then be employed for calculating a distance from the video game console 4 to the video game controller 8 based on the signal strength. As consoles are often placed by users adjacent to their displays, it can be assumed that the video game console 4 and the display 10 are approximately co-located, such that the distance between the video game console 4 and the videogame controller 8 is the same as the viewing distance (D). Optionally, a calibration process can be performed to improve the accuracy of the viewing distance measurement. For example, the video game console 4 can prompt the user to estimate the distance between the video game console 4 and the display 10 along an axis of viewing. Any other suitable calibration process can be carried out in other examples, depending on the choice of sensor.

Various other possibilities for performing this step with different types of sensors are discussed above with respect to Figure 1 and are not repeated here in the interest of brevity.

The video game console 4 can also, at step 104, check the number of concurrent viewers. This could be done in various ways, such as by checking a number of active and connected peripheral devices or using data from the sensor 14. For instance, if the sensor 14 comprises a camera, an analysis of an image taken by the camera may be able to detect multiple viewers. In this case, the video game console 4 determines the viewing distance (D) of the closest viewer to avoid negatively affecting any viewer's viewing experience.

In step 106, the video game console 4 sends a request to the server computer 2 to stream the content selected at step 102 and includes the determined viewing distance (D) in the request. Optionally, for more accurate results, the size (e.g., one or more of the aspect ratio, dimensions, and maximum resolution) of the display 10 can also be sent to the server computer 2, which may be obtainable by communication with the display 10. In other embodiments, the server computer 2 could be configured to use an average display size.

Additionally, stored user preferences 45 relevant to the streaming method 100 can be sent to the server computer 2, so that they can be considered in later step 110. For instance, the user 12 may be able to select through in-console menus a preference towards one of visual quality or latency reduction.

Any other relevant information can be included in the request or in a subsequent message to the server computer 2. For example, if the sensor 14 includes a light sensor, ambient lighting conditions could be sent to the sever computer 2 so that the video stream can be optimised to the user's environment.

The request and the viewing distance (D) are received by the server computer 2 at step 108, together with any other relevant information included in the request.

At step 110, the server computer 2 uses the viewing distance and any other relevant information provided by the video game console 4 to select, set or adjust one or more features of video data that is to be streamed to the video game console 4. The one or more features are adjusted to minimise the use of computational and network resources while avoiding negatively impacting the viewing experience of the user 12.

In one example, the resolution of the video data can be reduced or increased depending on whether the user 12 is positioned further from or closer to the display 10, respectively. In a more specific example, the user 12 may be positioned more than 3m away from the display 10, which has a 4K resolution. It is known that viewers are not able to distinguish details above a 1080p resolution when they are located more than about 3m away from a 4K display. In this case, the server computer 2 can select a lower resolution for video data that is to be streamed subsequently to the video game console 4.

More generally, a threshold distance for dropping the resolution, or adjusting a different feature of the video data, may be selected relative to the size of the display 10. For instance, larger threshold distances can be implemented for larger displays. In other words, the viewing distance (D) can be an "effective" or "parameterised" distance as well as an absolute distance. The threshold can be a 6H distance based on Nyquist theorem, described in more detail below, however thresholds based on other criteria can be implemented.

The maximum spatial frequency that can be displayed digitally is known as the "Nyquist frequency", which is half the sampling frequency. For instance, 1000 pixels can display at most 500 cycles per pixel. For medium brightness levels, about 30 cycles per degree (cy/deg) is a common maximum frequency perceptible by humans, although this can vary from viewer to viewer and based on brightness levels, up to about 60 cycles per degree. Details with a spatial frequency above 30 cy/deg may thus be indistinguishable to most viewers.

The width of a display determines the field of view of an image for a viewer at a given viewing distance. The field of view defines the mapping of a display's Nyquist frequency to the visual cycles per degree. This in turn affects visibility of high frequency aspects of encoding via the spatial CSF (Contrast Sensitivity Function) and viewing distance. A display's pixel resolution affects the visibility of compression distortions, especially if the display is required to do down-scaling, or up-scaling when edge sharpening algorithms are included.

Increasing the viewing distance increases the spatial frequency of a feature of the video data perceived by the user in cy/deg. The spatial frequency of a feature may pass the human limit in perceiving the difference between the two resolutions of the same video. For example, an angular resolution of 5 inches - 1080p resolution display, at a viewing distance of 14 inches (considering a viewing angle of 17.66 degrees) for a video sequence at 1080p, is around 53.92 cy/deg, which is beyond the human perception limit (for an average person at medium contrast level). Therefore, in these circumstances the video data can be reduced to a resolution of 720p, which corresponds to 35.95 cy/deg, without impacting the perceived quality of the video.

In summary, determining whether a visual detail would be displayed with a spatial frequency of greater than a threshold number of cycles per degree (such as 30, 45 or 60 cy/deg) is one way of implementing a threshold for adjusting a feature of the video data.

Knowledge from the sensor 14 about the distance to display 10, together with the size and resolution of the display 10, can also be used for optimizing adaptive bit rate (ABR) streaming of the video data.

One or more thresholds can be implemented by the server computer 2, where a viewing distance (D) greater than a given threshold indicates that the video data can be adjusted to reduce the visual detail of the resulting pictures without sacrificing the quality of the picture from the perspective of the user 12. The one or more thresholds can be set partially based on the user preferences 45 forwarded by the video game console 4 in step 106. For instance, if the user prefers to reduce latency over maximising visual detail, then the viewing distance thresholds may be lower, and vice versa.

This allows streaming to be carried out more efficiently, utilising less network bandwidth and thus reducing the latency of the streaming system 1 without negatively affecting the level of detail observable by the user 12.

Other features of the video data to be streamed can be adjusted alternatively or in addition. For instance, when the video data relates to a video game, the server computer 2 could render an in-game object with less detail (e.g., using less polygons) when the user 12 is determined to be above a threshold distance (D). This saves computational resources and thus also reduces streaming latency. The user preferences 45 can include preferences related to the in-game visual detail, which can also be factored-in when adjusting the video data. For instance, the user preferences 45 can include a selected preference of frames per second over visual quality. The selected preference could be used to determine whether certain in-game visual features, such as particle effects or reflection details, should be rendered. These preferences can determine an offset from a baseline level of visual detail rendered that is set by the user's viewing distance. Alternatively, the user's preferences can set a baseline level of visual detail and the user's current viewing distance (D) can be used to adjust the baseline level of detail.

In greater detail, in the present invention, video data of a video game can be adjusted based on a level of detail (LOD). A known approach to rendering video game objects involves the use of different LODs, which can be selected based on the distance of an in-game object from the virtual camera (in 3D game space). Objects further away from the in-game view can be drawn with less detail. This system can be augmented by data provided by the sensor 14 in the present invention. For example, when the user 12 is further away from the display 10, the LOD selected for a particular in-game object can be selected based on both the viewing distance (D) and the in-game distance from the object to the in-game viewing perspective (e.g., using a summation). For example, an in-game object relatively close to the virtual camera may be too far away from the real observer for them to distinguish between different LODs. In this case, a lower LOD can be selected for the object. This allows the viewing distance (D) to augment existing LOD selection methods with a correction or "bias" based on the actual distance of the viewer 12 from the display 10.

In further examples, the video data could be encoded differently based on the viewing distance, or have a lower or higher frame rate as the user is further or closer to the display 10, respectively, in order to reduce the amount of video data to be streamed. For example, video data can be encoded differently by changing the resolution or bits per pixel for streamed video data. This may be selected based on the viewing distance (D) and, optionally, any detected conditions of the user's local environment. This can be performed in addition to selecting the resolution or bits per pixel based on available network bandwidth.

In step 112, the video game console 4 receives the streamed video data through its network interface 48 and provides the video data to the display 10. The display 10 uses the video data to show video content or video game content to the user 12, who can enjoy the streaming with lower latency without sacrificing viewing quality.

In step 114, the video game console 4 can perform a periodic check of the viewing distance (D) to see if the user 12 has moved closer or further from the display 10. The periodic check may be performed once per 15 seconds, once per 30 seconds, once per minute, once per five minutes, or any other suitable frequency in other examples. If the video game console 4 determines that the viewing distance (D) has changed, the video game console 4 can send an updated viewing distance (D) to the server computer 2.

In step 116, the server computer 2 receives the updated viewing distance (D) and adjusts one or more features of the video data being streamed, as discussed previously in relation to step 110, based on the updated viewing distance (D).

Steps 110 to 116 can be repeated until the streaming session is completed.

The method 100 has been described above with respect to the example streaming system 1 of Figures 1 and 2. However, it would be appreciated the method 100 can be performed using any other suitable streaming device and server computer 2.

## Claims

1. A streaming system, comprising:
a server computer configured to send a stream of video data;
a streaming device configured to receive the video data and provide the video data to a display for displaying the video data to a viewer; and
a sensor in communication with the streaming device, configured to measure a quantity that enables a viewing distance between the display and the viewer to be determined;
wherein the streaming device is configured to use the quantity to determine the viewing distance and send the viewing distance to the server computer;
wherein the server computer is configured to adjust one or more features of the video data based on the viewing distance.

2. The streaming system of claim 1, wherein the streaming system is a video game streaming system, the server computer is configured to perform processing of a video game, and the video data comprises video data of the video game.

3. The streaming system of claim 1 or claim 2, wherein the one or more features include at least one feature related to an amount of visual detail contained in the video data.

4. The streaming system of any of the preceding claims, wherein the streaming device is configured to inform the server computer of the size and resolution of the display and the server computer is configured to adjust the one or more features relative to the size and resolution of the display.

5. The streaming system of any of the preceding claims, wherein the one or more features comprises one or more of: a resolution of the video data; an encoding of the video data; and a frame rate.

6. The streaming system of any of the preceding claims, further comprising a peripheral device configured to control the streaming device, wherein the sensor is provided on or in the peripheral device; wherein the peripheral device is a video game controller.

7. The streaming system of any of the preceding claims, wherein sensor comprises a microphone and the streaming device is configured to determine the viewing distance based on a time delay or volume of sound detected by the microphone and emitted by a speaker of the display.

8. The streaming system of any of the preceding claims, wherein the sensor comprises a wireless receiver configured to measure a signal strength of a signal received from the streaming device.

9. The streaming system of claim 8, wherein the streaming device is configured to calibrate the determined viewing distance to correct for a separation distance between the streaming device and the display.

10. The streaming system of any of the preceding claims, wherein the sensor comprises a camera or a light sensor.

11. The streaming system of claim 10, wherein the sensor comprises a camera and the streaming device is configured to provide a pattern to the display and use an image of the pattern taken by the camera to estimate the viewing distance.

12. The streaming system of any of the preceding claims, wherein the streaming device is configured to determine, based on a number of active peripheral devices connected to the streaming device or data from the sensor, that a plurality of viewers are present and to send the viewing distance of the nearest viewer to the server computer.

13. The streaming system of any of the preceding claims, wherein the one or more features are also adjusted based on user preferences stored by the server computer or the streaming device.

14. The streaming system of any of the preceding claims, wherein the streaming system is a video game streaming system, the video data represents an in-game visual feature, and the server computer is configured to adjust a level of detail of the visual feature based on the viewing distance.

15. A computer-implemented method of operating a streaming system, comprising:
sending, from a server computer to a streaming device, a stream of video data;
receiving the video data at the streaming device and providing the video data to a display for displaying the video data to a viewer;
measuring, using a sensor, a quantity that enables a viewing distance between the display and the viewer to be determined;
using, by the streaming device, the quantity to determine the viewing distance;
sending the viewing distance to the server computer; and
adjusting, by the server computer, one or more features of the video data based on the viewing distance.
